# EUROPÄISCHE PATENTANMELDUNG

(11) **EP 2 431 581 A1**
(43) Veröffentlichungstag der Anmeldung: **21.03.2012**
(21) Anmeldenummer: 11176435.3
(22) Anmeldetag: 03.08.2011
(51) Int. Cl.: F01M 11/04, F16N 19/00, F16N 31/00

(54) **Schmierstoff-Auffangbehälter**

(30) Priorität: 20.09.2010 DE 202010012758 U; 27.09.2010 DE 202010013614 U
(71) Anmelder: Lincoln GmbH, 69190 Walldorf (DE)
(72) Erfinder: Trinkel, Ralf, 67227 Frankenthal (DE); Schönfeld, Andreas, 68789 St. Leon-Rot (DE); Müller, Tobias, 76703 Kraichtal (DE)
(74) Vertreter: KEIL & SCHAAFHAUSEN Patentanwälte

(57) **Zusammenfassung**

Die Erfindung betrifft einen Schmierstoff-Auffangbehälter mit einer formstabilen Hülle (4) und einem darin aufgenommenen Auffangbeutel (21), wobei der Auffangbeutel (21) durch eine Haltevorrichtung in der formstabilen Hülle (4) fixiert und bei einer Bewegung des Schmierstoff-Auffangbehälters (26) derart stabilisiert ist, dass sich der Auffangbeutel (21) bei einer Bewegung des Schmierstoff-Auffangbehälters (26) nicht frei bewegen kann. Die Haltevorrichtung umfasst eine Falteinlage (1) mit einer Basisplatte (18) und einer die Basisplatte (18) zumindest teilweise überdeckenden Membran (22), wobei der Auffangbeutel (21) im Wesentlichen zwischen der Basisplatte (18) und der Membran (22) angeordnet ist und die Membran (22) den Auffangbeutel (21) bei gefalteter Falteinlage (1) vorzugsweise vollständig überspannt, um den Auffangbeutel (21) auf einfache Weise zu fixieren und zu stabilisieren.

## Beschreibung

Die Erfindung betrifft einen Schmierstoff-Auffangbehälter mit einer formstabilen Hülle und einem darin aufgenommenen Auffangbeutel. Weiter werden eine Schmierstoff-Sammeleinrichtung und eine Falteinlage für einen Schmierstoff-Auffangbehälter beschrieben.

Bei einer regelmäßigen Schmierstoffförderung, beispielsweise an Schmierstellen, die von einer Zentralschmieranlage versorgt werden, kommt es im Laufe der Zeit zum Austritt von Schmierstoff in die Umwelt bzw. in die nähere Umgebung. Dies ist aus verschiedenen Gründen, insbesondere aufgrund gewünschter Sauberkeit, Umweltverträglichkeit, Arbeitssicherheit, Wiederverwertung des Schmierstoffes oder dergleichen, unerwünscht, weshalb das Bedürfnis besteht, den aus den Lagerstellen bzw. Schmierstellen austretenden alten Schmierstoff aufzufangen und zu sammeln.

Die Druckschrift EP 2 093 474 A1 der Anmelderin beschreibt einen Schmierstoff-Auffangbehälter aus einer formstabilen Hülle und einem darin aufgenommenen Auffangbeutel mit wenigstens einer Einfüllöffnung. Ist der in dieser Anmeldung beschriebene Schmierstoff-Auffangbehälter einer Rotationsbewegung ausgesetzt, beispielsweise in der rotierenden Nabe einer Windkraftanlage, so wird beobachtet, dass der Auffangbeutel durch Abrieb, Rissbildung oder Abriss des Anschlusses teilweise zerstört wird und Schmierstoff in die Umwelt bzw. in die nähere Umgebung austritt.

Aufgabe der vorliegenden Erfindung ist es daher, die Nachteile des Standes der Technik zu überwinden und einen verbesserten Schmierstoff-Auffangbehälter zu schaffen, dessen Auffangbeutel ausreichend vor Zerstörung geschützt ist. Die Aufgabe besteht ferner darin, eine entsprechende Schmierstoff-Sammeleinrichtung zu schaffen.

Diese Aufgabe wird bei einem Schmierstoff-Auffangbehälter der eingangs genannten Art dadurch gelöst, dass der Auffangbeutel durch eine Haltevorrichtung in der formstabilen Hülle derart fixiert ist, dass der Auffangbeutel bei einer Bewegung des Schmierstoff-Auffangbehälters stabilisiert ist. Die Haltevorrichtung stabilisiert dabei den Auffangbeutel derart, dass sich dieser bei einer Bewegung des Schmierstoff-Auffangbehälters nicht frei bewegen kann.

Die Erfindung beinhaltet die Erkenntnis, dass sich der Auffangbeutel in dem Schmierstoff-Auffangbehälter, wenn er einer Rotationsbewegung, beispielsweise in der rotierenden Nabe einer Windkraftanlage, ausgesetzt wird, mehr oder weniger frei bewegen kann. Aus der Drehzahl der Nabe und dem Abstand des Schmierstoff-Auffangbehälters zur Drehachse ergibt sich eine zu geringe Fliehkraft, um den Auffangbeutel ausreichend zu stabilisieren. Deshalb ist es vorteilhaft, den Auffangbeutel durch eine Haltevorrichtung in der formstabilen Hülle zu fixieren, so dass dieser sich nicht frei bewegen kann. Hierdurch werden Abrieb und Rissbildung verhindert und eine vorzeitige Zerstörung des Auffangbeutels vermieden.

Die erfindungsgemäße Ausgestaltung ist gegenüber dem Stand der Technik robuster und sicherer gegenüber Auslaufen des gesamten Schmierstoff-Auffangbehälters und insbesondere des Auffangbeutels. Dabei ist der Auffangbeutel - abgesehen von seiner Einfüllöffnung - vorzugsweise allseitig geschlossen. Sowohl die formstabile Hülle wie auch die erfindungsgemäße Haltevorrichtung sind einfach konstruiert und damit auch kostengünstig herstellbar.

Erfindungsgemäß umfasst die Haltevorrichtung eine Falteinlage mit einer Basisplatte und einer die Basisplatte zumindest teilweise überdeckenden Membran, wobei der Auffangbeutel im Wesentlichen zwischen der Basisplatte und der Membran angeordnet ist und die Membran den Auffangbeutel bei aufgerichteter Falteinlage vorzugsweise vollständig überspannt.

Durch diese erfindungsgemäße Anordnung wird der Auffangbeutel nicht nur im leeren, gefalteten Zustand durch die Membran auf der Basisplatte gehalten, sondern auch dann, wenn er sich langsam mit Schmierstoff füllt. Dabei dehnt sich die Membran entsprechend der Füllung des Auffangbeutels gleichmäßig aus, hält den Auffangbeutel aber weiterhin durch die entstehenden Spannkräfte derart auf der Basisplatte fest, dass er nicht hin- und herwalken kann. Hierdurch wird der Auffangbeutel vor Zerstörung geschützt.

Bevorzugt weist die Membran eine Dehnung von bis zu 400% auf, so dass der Auffangbeutel das vorgesehene bzw. benötigte Volumen an Schmierstoff aufnehmen kann. Ganz besonders bevorzugt überspannt die Membran die Falteinlage vollständig, so dass der gesamte Auffangbeutel gehalten wird. Als Material für die Membran kann beispielsweise Polyurethan (PU) verwendet werden. Bevorzugt kann eine solche Membran aus PU eine Dicke zwischen 50 µm und 500 µm, besonders bevorzugt zwischen 50 µm und 200 µm, aufweisen. Für andere Materialien kann die Dicke der Membran zwischen wenigen µm bis 500 µm betragen.

In einem Ausführungsbeispiel weist die Basisplatte wenigstens eine Sollknickstelle, vorzugsweise vier Sollknickstellen, insbesondere sechs Sollknickstellen, zur Faltung auf, wobei die Sollknickstelle vorzugsweise im Wesentlichen parallel zu der Außenkante der Basisplatte verläuft. Entlang der Sollknickstelle/n wird die Basisplatte gefaltet, so dass die Membran über den Auffangbeutel gespannt wird und ihn auch im leeren, gefalteten Zustand sicher an seiner vorgesehenen Position hält. Durch das Falten der Basisplatte verteilen sich die bei Füllung des Auffangbeutels entstehenden Kräfte besser über die gesamte Falteinlage.

In Weiterbildung der Erfindung ist die Falteinlage derart faltbar, dass sie mindestens zwei, vorzugsweise drei, wandartige Segmente ausbildet, welche an mindestens zwei, vorzugsweise drei, benachbarten Wänden der formstabilen Hülle anliegen. Durch diese Ausgestaltung der Basisplatte ergibt sich für die Falteinlage eine Form, die auf einfache Weise die Bewegungen der Falteinlage und des darauf gehaltenen Auffangbeutels verhindert, wenn die Falteinlage in die formstabile Hülle eingesetzt ist.

Es hat sich als zweckmäßig herausgestellt, dass die Basisplatte der Falteinlage eine Ausnehmung für die Anordnung einer Einfüllöffnung des Auffangbeutels aufweist. Dabei kann die Ausnehmung in der Basisplatte die Einfüllöffnung des Auffangbeutels so umschließen, dass sich die Einfüllöffnung nicht mehr frei bewegen kann. Auch diese Fixierung des Auffangbeutels bewirkt einen besseren Schutz vor Zerstörung, insbesondere am mechanisch belasteten Übergang vom flexiblen Beutel zur steiferen Einfüllöffnung.

Vorzugsweise ist die Einfüllöffnung mit einem Anschlusselement versehen, das eine Strömungsverbindung zwischen dem Auffangbeutel und beispielsweise einer Sammelleitung für den Schmierstoff herstellt.

Das Wandmaterial der formstabilen Hülle und/oder das Material der Basisplatte der Falteinlage kann Karton, Pappe oder Wellpappe enthalten oder vollständig aus mindestens einem dieser Materialien bestehen. Wenn dieses Wandmaterial verwendet wird, kann der gesamte Auffangbehälter einschließlich der Falteinlage mit besonders geringem Gewicht und zugleich kostengünstig hergestellt werden. Vorteilhafterweise ermöglicht diese Ausgestaltung auch eine einfache optische Aufwertung der formstabilen Hülle und/oder der Falteinlage, beispielsweise durch Bedrucken. Schließlich kann bei der Verwendung von Karton, Pappe oder Wellpappe das Wandmaterial leicht entsorgt oder umweltfreundlich wiederverwertet werden.

Zudem kann der Auffangbeutel als Kunststoffbeutel ausgebildet sein. Insbesondere kann dieser als ein an seinem Inneren verschweißter Schlauch ausgebildet sein. Als Kunststoff für den Auffangbeutel kann ein thermoplastisches Material eingesetzt werden, beispielsweise eine LLDPE-Folie. Das Material wird auch als PE-LLD oder lineares Polyethylen niederer Dichte bezeichnet.

Für eine verbesserte Handhabung von Auffangbeutel und Schmierstoff-Auffangbehälter kann der Auffangbeutel im Bereich der Einfüllöffnung wiederholt lösbar an der Basisplatte der Falteinlage und/oder an der formstabilen Hülle befestigt sein. Vorteilhafterweise ermöglicht dies, zur Entsorgung des Altschmierstoffes lediglich entweder nur den gefüllten Auffangbeutel oder die Falteinlage mit dem gefüllten Auffangbeutel zu entsorgen und einen neuen Auffangbeutel oder eine neue Falteinlage mit Auffangbeutel in den Schmierstoff-Auffangbehälter einzusetzen. Alternativ kann auch der gesamte Schmierstoff-Auffangbehälter mit formstabiler Hülle, Falteinlage und Auffangbeutel ersetzt werden. Gleichzeitig kann durch die Befestigung des Auffangbeutels an der Basisplatte der Falteinlage und/oder an der formstabilen Hülle die Einfüllöffnung definiert ausgerichtet werden. Dies erleichtert unter anderem das Vorsehen eines Anschlusselements an der Einfüllöffnung.

Durch die einfache und kostengünstige Konstruktion der formstabilen Hülle und der Haltevorrichtung sind verschiedene Formen und Abmessungen von Schmierstoff-Auffangbehältern leicht realisierbar.

Die oben angegebene Aufgabe wird zudem von einer Schmierstoff-Sammeleinrichtung mit wenigstens einem an einer Schmierstelle anbringbaren Auffangelement zum Auffangen von Schmierstoff, welcher von der Schmierstelle abgegeben wird, gelöst. Die Schmierstoff-Sammeleinrichtung zeichnet sich dadurch aus, dass das Auffangelement vorzugsweise über wenigstens eine Sammelleitung mit wenigstens einem oben beschriebenen, erfindungsgemäßen Schmierstoff-Auffangbehälter in Strömungsverbindung steht. Dies bedeutet, dass das Auffangelement entweder über wenigstens eine Sammelleitung mit dem Schmierstoff-Auffangbehälter verbunden ist oder dass alternativ der Schmierstoff-Auffangbehälter direkt an das Auffangelement angeschlossen werden kann.

Der Schmierstoff-Auffangbehälter und/oder das Auffangelement und/oder die Sammelleitung sind vorzugsweise so ausgestaltet, dass ein Auffangen bzw. ein Ableiten von Schmierstoff unter Ausnutzung der Schwerkraft möglich ist, so dass gegebenenfalls keine weiteren Fördermittel oder dergleichen erforderlich sind.

Das Auffangelement, das auch ein Absaugelement sein kann, ist einer Schmierstelle so zugeordnet, dass austretender Schmierstoff aufgefangen und durch die Sammelleitung, an der weitere Schmierstellen angeschlossen sein können, in den Schmierstoff-Auffangbehälter geleitet wird.

Dabei kann der Schmierstoff-Auffangbehälter wiederholt lösbar mit der Sammelleitung verbunden sein. Auf diese Weise lässt sich der Schmierstoff zu einem vorzugsweise in der Nähe einer Schmierstoffpumpe angeordneten Schmierstoff-Auffangbehälter leiten, der somit schnell und einfach durch einen leeren Behälter bzw. einen leeren Auffangbeutel auf einer Falteinlage ersetzt werden kann.

Weiter wird die der Erfindung zugrundeliegende Aufgabe durch eine Falteinlage für einen Schmierstoff-Auffangbehälter gelöst, der eine formstabilen Hülle und einen Auffangbeutel aufweist. Die Falteinlage ist eine einfache Möglichkeit zur Stabilisierung des Auffangbeutels bei einer Bewegung des Schmierstoff-Auffangbehälters. Dabei umfasst die Falteinlage eine Basisplatte und eine die Basisplatte zumindest teilweise überdeckende Membran, wobei der Auffangbeutel im Wesentlichen zwischen der Basisplatte und der Membran anordenbar ist und wobei der Auffangbeutel mittels der Membran bei gefalteter Falteinlage vorzugsweise vollständig überspannbar ist.

Durch diese erfindungsgemäße Ausgestaltung der Falteinlage wird der Auffangbeutel nicht nur im leeren, gefalteten Zustand durch die Membran auf der Basisplatte gehalten, sondern auch dann, wenn er sich langsam mit Schmierstoff füllt. Dabei dehnt sich die Membran entsprechend der Füllung des Auffangbeutels aus, hält den Auffangbeutel aber weiterhin derart auf der Basisplatte fest, dass er nicht hin- und herwalken kann und folglich vor einer Zerstörung geschützt wird.

Bevorzugt weist die Membran eine Dehnung von bis zu 400% auf, so dass der Auffangbeutel das vorgesehene bzw. benötigte Volumen an Schmierstoff aufnehmen kann. Ganz besonders bevorzugt überspannt die Membran die Falteinlage vollständig. Als Material für die Membran kann beispielsweise PU, vorzugsweise mit der oben angegebenen Dicke, verwendet werden.

Durch die Ausgestaltung der erfindungsgemäßen Falteinlage ist ein Austausch entweder nur des gefüllten Auffangbeutels oder der Falteinlage mit Auffangbeutel problemlos möglich und in sehr kurzer Zeit realisierbar. Gerade bei der regelmäßigen Wartung von Schmierstellen ist diese einfache Austauschbarkeit von Vorteil.

In Weiterbildung der Falteinlage weist die Basisplatte wenigstens eine Sollknickstelle, vorzugsweise vier Sollknickstellen, insbesondere sechs Sollknickstellen, zur Faltung auf, wobei die Sollknickstelle vorzugsweise im Wesentlichen parallel zu der Außenkante der Basisplatte verläuft. Entlang der Sollknickstelle/n wird die Basisplatte gefaltet, so dass die Membran über den Auffangbeutel gespannt wird und ihn auch im leeren, gefalteten Zustand sicher an seiner vorgesehenen Position hält.

Bevorzugt ist die Falteinlage derart faltbar, dass sie mindestens zwei, vorzugsweise drei, wandartige Segmente ausbildet, welche an mindestens zwei, vorzugsweise drei, benachbarten Wänden der formstabilen Hülle anlegbar ist. Durch diese Ausgestaltung der Basisplatte ergibt sich für die Falteinlage eine Form, die auf einfache Weise Bewegungen der Falteinlage und des Auffangbeutels verhindert, insbesondere wenn die Falteinlage in eine formstabile Hülle eingesetzt ist.

Um den Auffangbeutel problemlos über ein Anschlusselement mit einer Sammelleitung zu verbinden, weist die Basisplatte eine Ausnehmung für die Anordnung einer Einfüllöffnung des Auffangbeutels auf. Zudem kann die Ausnehmung so ausgestaltet sein, dass die Einfüllöffnung in der Basisplatte fixiert wird, so dass sie sich nicht mehr frei bewegen kann.

Das Material der Basisplatte der Falteinlage kann Karton, Pappe oder Wellpappe enthalten. Bei Verwendung dieses Materials kann die Falteinlage mit besonders geringem Gewicht und zugleich kostengünstig hergestellt werden, ohne dass die Stabilität beeinträchtigt wird. Zudem ist es problemlos möglich, die Falteinlage in den richtigen Abmessungen bezüglich der formstabilen Hülle zu realisieren. Dabei sind abhängig von unterschiedlich gestalteten formstabilen Hüllen verschiedene Formen der Falteinlage denkbar. Schließlich kann bei der Verwendung von Karton, Pappe oder Wellpappe das Material der Basisplatte leicht entsorgt oder umweltfreundlich wiederverwertet werden.

Weitere Merkmale, Vorteile und Anwendungsmöglichkeiten der Erfindung ergeben sich auch aus der nachfolgenden Beschreibung von Ausführungsbeispielen und den Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen schematisch:
- Fig. 1: eine Transportverpackung für eine erfindungsgemäße Falteinlage und eine formstabile Hülle in einer Ansicht von oben,
- Fig. 2: den Anlieferzustand der erfindungsgemäßen Falteinlage einschließlich Auffangbeutel zusammen mit der formstabilen Hülle im nicht aufgerichteten Zustand in einer Ansicht von oben,
- Fig. 3: einen Zuschnitt für die formstabile Hülle,
- Fig. 4 bis 9: das Aufrichten der formstabilen Hülle in mehreren Schritten in perspektivischen Ansichten von der Seite,
- Fig. 10: einen Zuschnitt für die Basisplatte der Falteinlage,
- Fig. 11: die erfindungsgemäße Falteinlage mit Auffangbeutel und darüber ausgebreiteter Membran im nicht gefalteten Zustand in einer Ansicht von oben,
- Fig. 12: die erfindungsgemäße Falteinlage mit Auffangbeutel und darüber vorgespannter Membran gemäß Fig. 11 in einem teilweise gefalteten Zustand in einer perspektivischen Ansicht von der Seite,
- Fig. 13: die erfindungsgemäße Falteinlage mit Auffangbeutel und darüber gespannter Membran gemäß Fig. 11 im vollständig gefalteten Zustand in einer perspektivischen Ansicht von der Seite,
- Fig. 14 und 15: das Einsetzen der gefalteten erfindungsgemäßen Falteinlage gemäß Fig. 13 in eine aufgerichtete formstabile Hülle gemäß Fig. 8 in perspektivischen Ansichten von der Seite,
- Fig. 16: die vollständig in die formstabile Hülle eingesetzte erfindungsgemäße Falteinlage in einer Ansicht von oben und
- Fig. 17 bis 20: das Verschließen der formstabilen Hülle gemäß Fig. 16 in mehreren Schritten in Ansichten von oben.

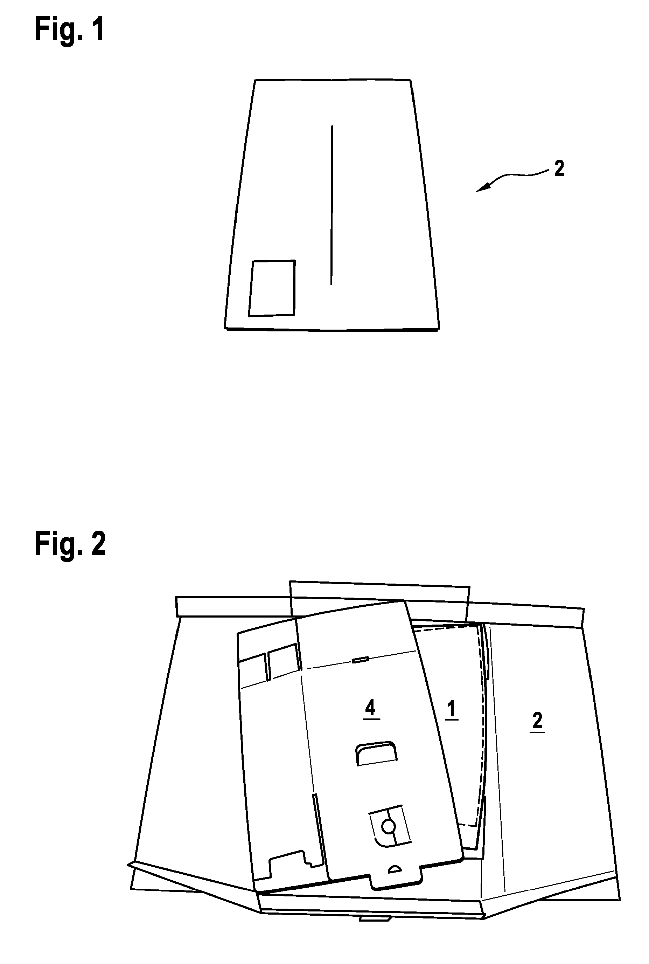

Fig. 1 zeigt eine flache und handliche Transportverpackung 2, in der (in Fig. 1 nicht erkennbar) eine erfindungsgemäße Falteinlage 1 und ein Zuschnitt 3 für eine formstabile Hülle 4 in einem nicht gefalteten Zustand untergebracht sind. Die Transportverpackung 2 ist leicht und kann mit nur geringem Platzaufwand transportiert werden.

In Fig. 2 wird der Anlieferzustand der erfindungsgemäßen Falteinlage 1 und der formstabilen Hülle 4 im nicht gefalteten Zustand in der Transportverpackung 2 gezeigt. Auf diese Weise kann die Transportverpackung 2 einfach zum Einsatzort mitgeführt werden, um dort die Falteinlage 1 und die formstabilen Hülle 4 zu entnehmen und zu falten. Wie im Folgenden gezeigt wird, ist dies ohne weitere technische Hilfsmittel möglich.

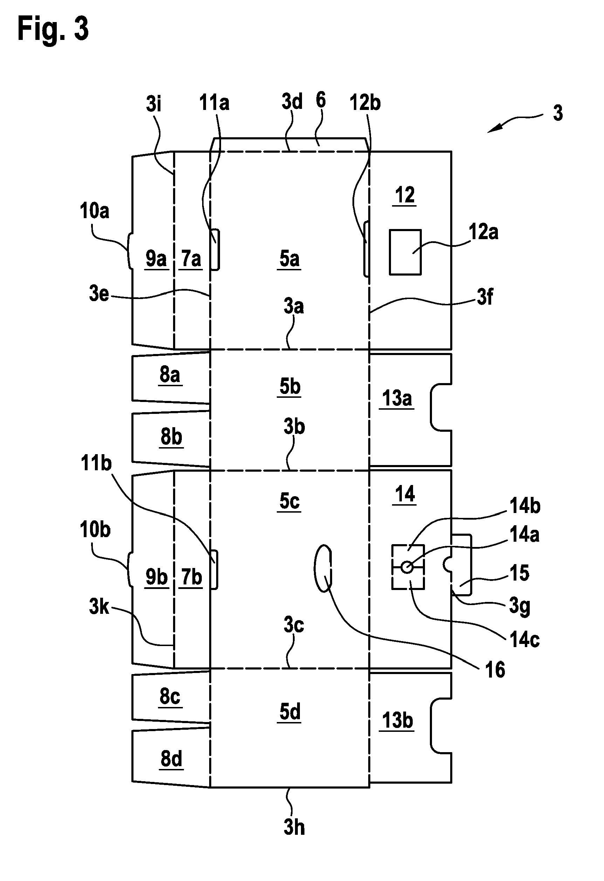

Der in Fig. 3 gezeigte Zuschnitt 3 für die formstabile Hülle 4 hat eine im Wesentlichen rechteckige Form, welche an mehreren Stellen Ausnehmungen aufweist. Der Zuschnitt 3 hat vier Seitenwände 5a, 5b, 5c, 5d, die über Sollknickstellen 3a, 3b, 3c aneinander angelenkt sind. Über eine Sollknickstelle 3d wird eine Verbindungslasche 6 angelenkt. Über eine weitere Sollknickstelle 3e werden (in der in Fig. 3 dargestellten Reihenfolge von oben nach unten) das erste Bodenteil 7a, die kurzen Seitenlaschen 8a, 8b, das zweite Bodenteil 7b und die kurzen Seitenlaschen 8c und 8d angelenkt. Ausgehend von den beiden Bodenteilen 7a und 7b werden über weitere Sollknickstellen 3i, 3k jeweils die langen Bodenlaschen 9a, 9b angelenkt, welche an ihrem äußeren Rand Haltenasen 10a, 10b aufweisen. An der Sollknickstelle 3e in der Mitte zwischen der Seitenwand 5a und dem ersten Bodenteil 7a bzw. der Seitenwand 5c und dem zweiten Bodenteil 7b sind Ausnehmungen 11 a, 11 b vorgesehen.

Über eine Sollknickstelle 3f (wiederum in der in Fig. 3 dargestellten Reihenfolge von oben nach unten) werden die lange Deckellasche 12, die kurze Deckellasche 13a, der Deckel 14 und die kurze Deckellasche 13b angelenkt. Mittig in der langen Deckellasche 12 befindet sich eine Ausnehmung 12a. Am Rand der Deckellasche 12 zur Sollknickstelle 3f hin befindet sich eine weitere Ausnehmung 12b. Ebenfalls mittig im Deckel 14 befindet sich eine Ausnehmung 14a, die von Kartonlaschen 14b, 14c umgeben ist. An der Außenkante des Deckels 14 wird über einer Sollknickstelle 3g eine Sicherungslasche 15 angelenkt. In der Seitenwand 5c ist zudem eine Eingriffsöffnung 16 vorgesehen. Weitere Eingriffsöffnungen können bei Bedarf in den Seitenwänden 5a, 5b, 5d vorgesehen sein.

In dem in Fig. 2 gezeigten Anlieferzustand ist die Verbindungslasche 6 bereits über die Sollknickstelle 3d und der Zuschnitt über die Sollknickstelle 3b umgefaltet, so dass die Verbindungslasche 6 mit der Seitenwand 5d an deren Außenkante 3h, beispielsweise mittels Verkleben, verbunden ist. Allerdings ist es auch denkbar, die Teile durch Metallklammern oder ähnliche Befestigungsmittel miteinander zu verbinden.

Als Sollknickstellen 3a, 3b, 3c, 3d, 3e, 3f, 3i, 3k werden insbesondere gerade, linienförmige Falze oder Nuten in dem Zuschnitt 3 verstanden, entlang derer der Zuschnitt 3 leicht gefaltet werden kann.

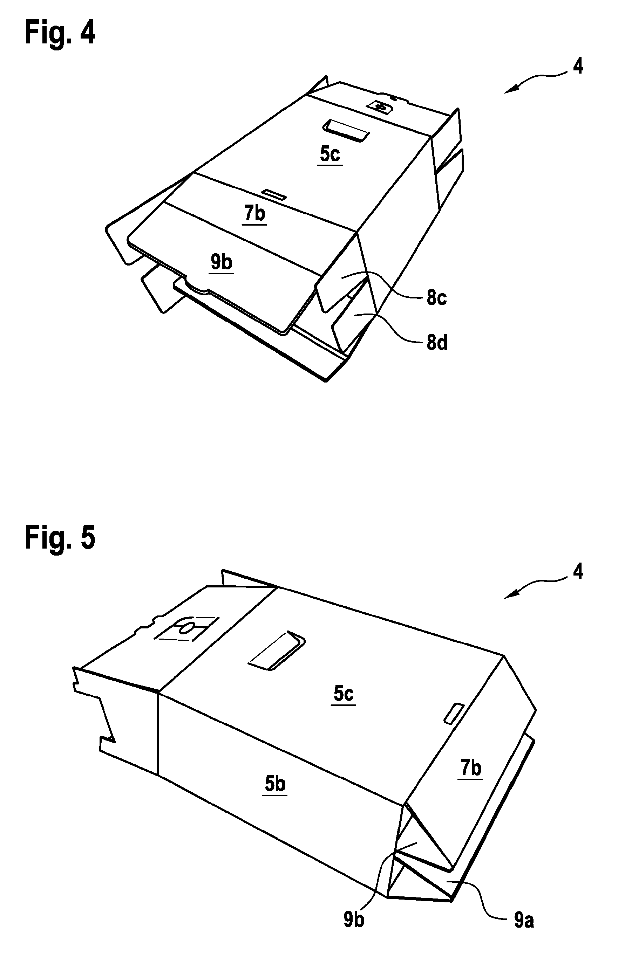

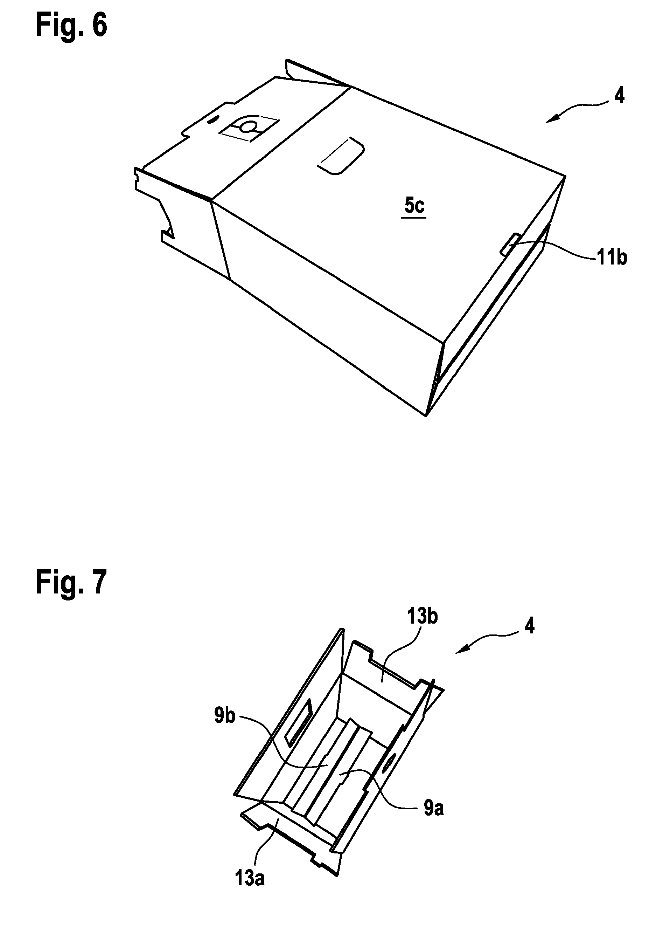

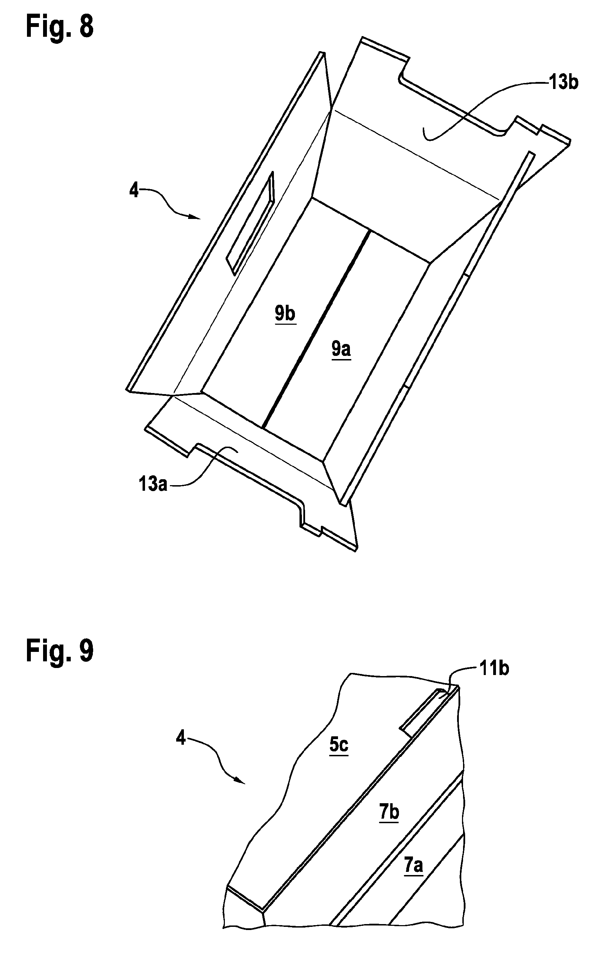

Fig. 4 zeigt einen ersten Schritt zum Aufrichten der formstabilen Hülle 4, in dem der flache, gefaltete Zuschnitt der formstabilen Hülle 4 so aufgefaltet wird, dass die Seitenwände 5a/5b, 5b/5c, 5c/5d, 5d/5a jeweils im rechten Winkel zueinander stehen. Danach werden zunächst die kurzen Seitenlaschen 8a, 8b, 8c, 8d der formstabilen Hülle 4 nach innen einschlagen (Fig. 4). Anschließend werden das erste und das zweite Bodenteil 7a, 7b an der Sollknickstelle 3e umgefaltet und danach die langen Bodenlaschen 9a, 9b zwischen den kurzen Seitenlaschen 8a, 8b, 8c, 8d hindurch ins Innere der formstabilen Hülle 4 geführt (Fig. 5) und nach innen gedrückt, so dass diese in die formstabile Hülle 4 ragen (Fig. 6). Die ins Innere der formstabilen Hülle 3 geführten langen Bodenlaschen 9a, 9b werden von der Mitte des Bodens 7a, 7b (Fig. 7) zu den Seitenwänden 5a, 5c der formstabilen Hülle 4 so weit umgeklappt (Fig. 8), bis die Haltenasen 10a, 10b in die entsprechenden Ausnehmungen 11a, 11 b der Seitenwände 5a, 5c einrasten (Fig. 9). Die in dieser Art teilweise aufgerichtete formstabile Hülle 4 steht bereits fest und formstabil und ist für die Aufnahme der Falteinlage 1 vorbereitet. Umgangssprachlich wird die formstabile Hülle 4 häufig auch als "Umkarton" bezeichnet.

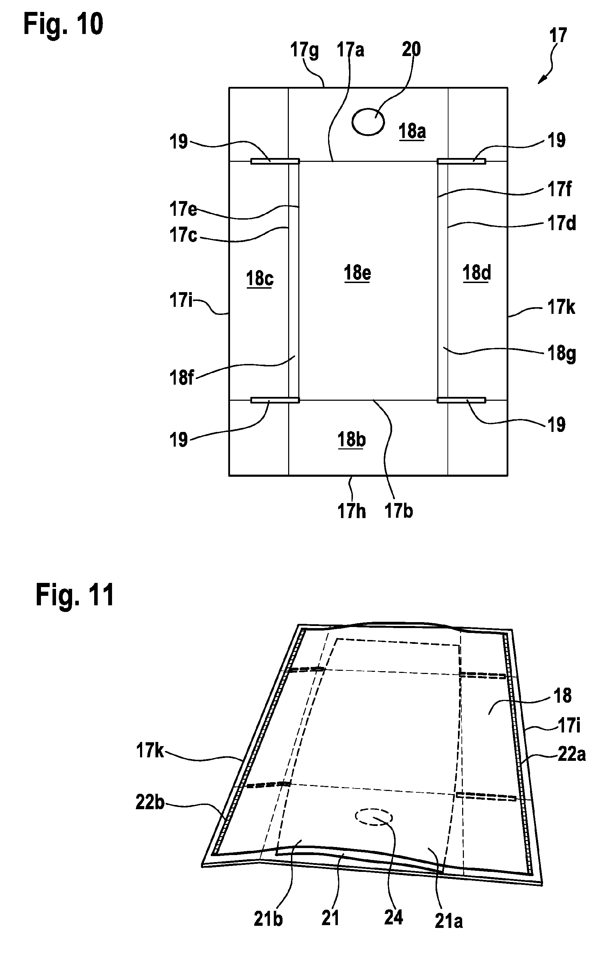

In Fig. 10 wird schematisch der Zuschnitt 17 für eine Basisplatte 18 der Falteinlage 1 dargestellt. Der Zuschnitt 17 hat eine im Wesentlichen rechteckige Form und weist sechs Sollknickstellen 17a, 17b, 17c, 17d, 17e, 17f auf, wobei die Sollknickstellen 17a, 17b im Wesentlichen parallel zu den oberen und unteren Außenkanten 17g, 17h des Zuschnitts 17 und die Sollknickstellen 17c, 17d, 17e, 17f im Wesentlichen parallel zu den rechten und linken Außenkanten 17i, 17k des Zuschnitts 17 verlaufen. Die Sollknickstellen 17a, 17b verlaufen über die gesamte Breite des Zuschnitts 17, und die Sollknickstellen 17c, 17d verlaufen über die gesamte Länge des Zuschnitts 17. Die Sollknickstellen 17e, 17f verlaufen nicht über die gesamte Länge des Zuschnitts 17, sondern jeweils nur zwischen den Sollknickstellen 17a und 17b, wie aus Fig. 10 zu erkennen ist.

Als Sollknickstellen 17a, 17b, 17c, 17d, 17e, 17f werden insbesondere gerade, linienförmige Falze oder Nuten in dem Zuschnitt 17 verstanden, entlang derer der Zuschnitt 17 leicht gefaltet werden kann. Der Begriff "Zuschnitt" mit dem Bezugszeichen 17 bezieht sich auf die schematische Darstellung der Fig. 10, während der Begriff "Basisplatte" mit dem Bezugszeichen 18 für das aus dem Zuschnitt hervorgehende Teil der Falteinlage 1 verwendet wird. Der Begriff "Sollknickstelle/n" bezieht sich folglich nicht nur auf den Zuschnitt 17 sondern auch auf die Basisplatte 18.

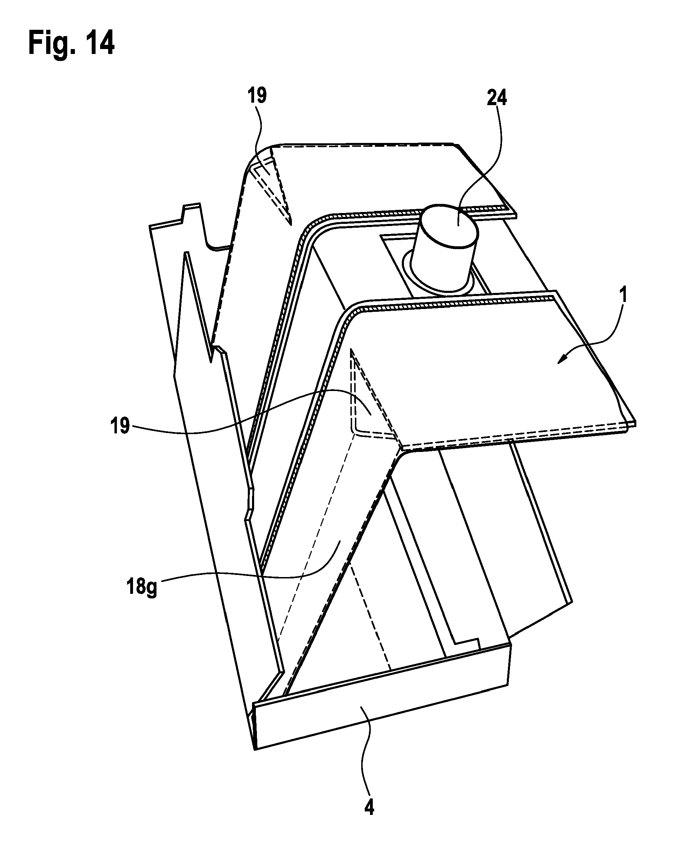

Die Sollknickstellen 17a, 17b, 17c/17e, 17d/17f lenken jeweils die Laschen 18a, 18b, 18c, 18d an. Zum Aufrichten der Falteinlage 1 werden die Laschen 18c, 18d in Bezug auf die Ansichtsebene nach hinten umgefaltet. Dabei liegen die Sollknickstellen 17c/17e und 17d/17f relativ dicht nebeneinander, so dass sie nach dem Umfalten jeweils einen schmalen Steg 18f, 18g zwischen dem Mittelteil 18e der Basisplatte 18 und den angelenkten Laschen 18c, 18d bilden. In Fig. 14 ist der schmale Steg 18g gut zu erkennen.

In Bereichen, in denen sich jeweils Sollknickstellen 17a/17c, 17a/17d, 17b/17c, 17b/17d kreuzen, kann der Zuschnitt 17 perforiert oder durchgestanzt sein (Perforation 19), um die Faltung der Eckbereiche zu erleichtern (siehe Fig. 14). In der Lasche 18a ist zudem eine Ausnehmung 20 vorgesehen.

Die in Fig. 11 dargestellte erfindungsgemäße Falteinlage 1 umfasst eine Basisplatte 18, einen Auffangbeutel 21 und eine Membran 22. In Fig. 11 ist die Falteinlage 1 im flachen, nicht gefalteten Zustand dargestellt. In diesem Zustand kann der Auffangbeutel 21 problemlos zwischen die Basisplatte 18 und die Membran 22 eingeschoben werden. Der Auffangbeutel 21 ist, wie in Fig. 11 dargestellt, somit lose zwischen der Basisplatte 18 und der Membran 22 angeordnet. Eine Einfüllöffnung 23 des Auffangbeutels 21 wird dabei durch die Ausnehmung 20 der Lasche 18a der Basisplatte 18 geführt. Mittels der Einfüllöffnung 23 wird der Auffangbeutel 21 über ein Anschlusselement 24 beispielsweise mit einer Sammelleitung für Schmierstoff verbunden. Das Anschlusselement 24 kann beispielsweise ein Rückschlagventil aufweisen.

Der Auffangbeutel 21 zwischen der Basisplatte 18 und der Membran 22 kann, wie in Fig. 11 gezeigt, gefaltet eingelegt werden. Prinzipiell ist die Faltrichtung des Beutels dabei frei wählbar. Es hat sich aber als vorteilhaft erwiesen, wenn der Auffangbeutel 21 an seinem rechten und linken Rand 21 a, 21 b jeweils zweioder mehrfach umgeschlagen ist, so dass sich der Auffangbeutel 21 ziehharmonikaförmig öffnen kann. Der obere und untere Rand des Auffangbeutels 21 sind vorzugsweise nicht gefaltet.

Die Membran 22 ist vorzugsweise an ihren rechten und linken Außenkanten 22a, 22b mit den rechten und linken Außenkanten 17i, 17k des Zuschnitts 17 für die Basisplatte 18 verbunden, beispielsweise verklebt oder verschweißt, um eine gute Positionierung zu ermöglichen. Eine Verschweißung der Membran 22 mit der Basisplatte 18 ist insbesondere dann von Vorteil, wenn die Falteinlage beschichtet oder aus einem Kunststoff-Material gefertigt ist.

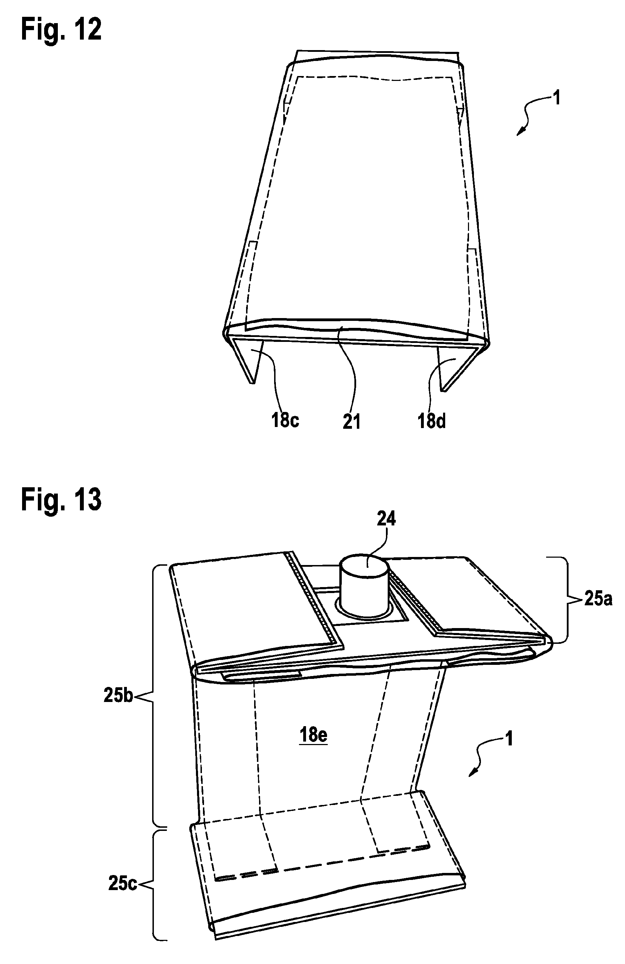

In Fig. 12 wird dargestellt, wie durch Umfalten der Laschen 18c, 18d entlang der Sollknickstellen 17c/17e, 17d/17f auf die dem Auffangbeutel 21 abgewandte Seite (d.h. auf die Rückseite) der Basisplatte 18 die Membran 22 vorgespannt wird. Bei diesem Umfalten ist darauf zu achten, dass der Auffangbeutel 21 nicht mit nach hinten umgeschlagen wird, sondern vollständig in dem nicht umgefalteten Mittelteil 18e der Basisplatte 18 angeordnet bleibt, da er sich sonst beim Aufnehmen des Schmierstoffs nicht richtig entfalten kann. Die Laschen 18c, 18d werden zum vollständigen Spannen der Membran 22 auf die Rückseite des Mittelteils 18e der Basisplatte 18 umgefaltet, wobei sich durch die doppelten Sollknickstellen 17c/17e, 17d/17f die schmalen Stege 18f, 18g ausbilden. Hierdurch wird der Auffangbeutel 21 in der gewünschten Position festgehalten. Der Mittelteil 18e der Basisplatte 18 bildet ein mittleres wandartiges Segment 25b der Falteinlage 1.

In dem in Fig. 13 gezeigten nächsten Schritt werden die Laschen 18a, 18b in Richtung des Auffangbeutels 21 umgefaltet, d.h. in Bezug auf die Ansichtsebene nach vorne, bis sie ungefähr im rechten Winkel zu dem Mittelteil 18e der Basisplatte 18 stehen. Hierbei kann der Auffangbeutel 21 mit umgeschlagen werden, da er sich auch beim Aufnehmen des Schmierstoffs nach vorne hin ausdehnen kann. Die umgefaltete Lasche 18a der Basisplatte 18 bildet ein oberes wandartiges Segment 25a der Falteinlage 1, und die umgefaltete Lasche 18b der Basisplatte 18 bildet ein unteres wandartiges Segment 25c der Falteinlage 1. Die erfindungsgemäße Falteinlage 1, wie sie in Fig. 13 dargestellt wird, ist nun vollständig aufgerichtet.

In Fig. 14 ist der Bereich dargestellt, in dem sich die Sollknickstellen 17a/17c und 17a/17d kreuzen. Wie aus der bevorzugten Ausführungsform zu erkennen ist, lassen sich die Laschen 18a, 18b besser umfalten, wenn die Sollknickstellen 17a, 17b jeweils in Teilbereichen an der Perforation 19 durchgestanzt sind.

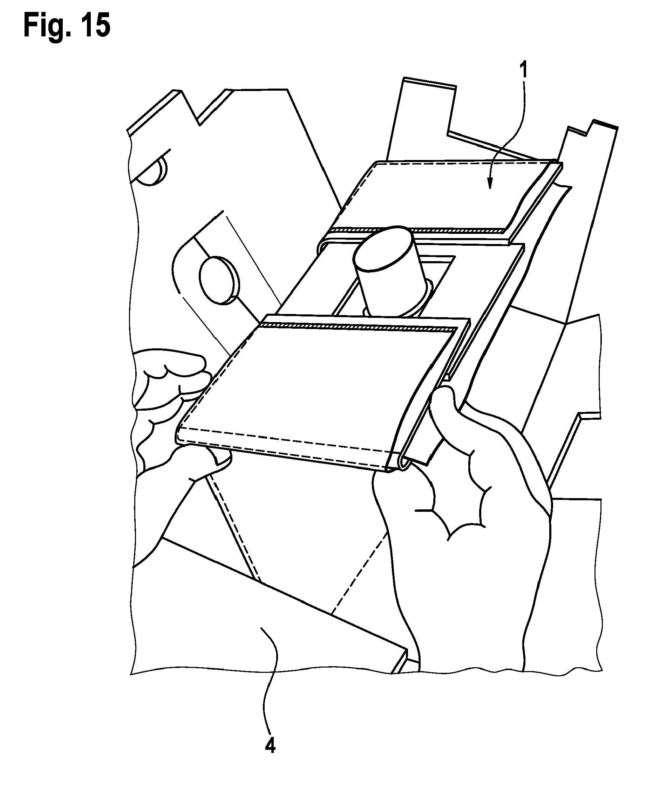

Die fertig gefaltete Falteinlage 1 wird in die wie vorstehend beschriebene aufgerichtete formstabile Hülle 4 eingesetzt (Fig. 14), um den Schmierstoff-Auffangbehälter 26 fertigzustellen. Dabei wird die Rückseite der Falteinlage 1, welche nicht die Bespannung mit der Membran 22 und dem Auffangbeutel 21 aufweist, der Seitenwand 5c der formstabilen Hülle 4 zugewandt. Das mittlere wandartige Segment 25b liegt folglich mit seiner Rückseite an der Innenseite der Seitenwand 5c an, in der sich eine Eingriffsöffnung 16 zur Handhabung des Schmierstoff-Auffangbehälters 26 befindet (Fig. 15). Hierdurch wird verhindert, dass beim Eingreifen in die Eingriffsöffnung 16 der Auffangbeutel 21 und/oder die Membran 22 beschädigt werden und gegebenenfalls auslaufen. Das durch die umgefaltete Lasche 18b der Basisplatte 18 gebildete untere wandartige Segment 25c liegt an dem Boden 7a, 7b der formstabilen Hülle 4 an. Mit ihren rechten und linken Außenkanten liegen die wandartigen Segmente 25a, 25b, 25c nun zwischen den Seitenwänden 5b und 5d, so dass kein seitliches Spiel vorhanden ist.

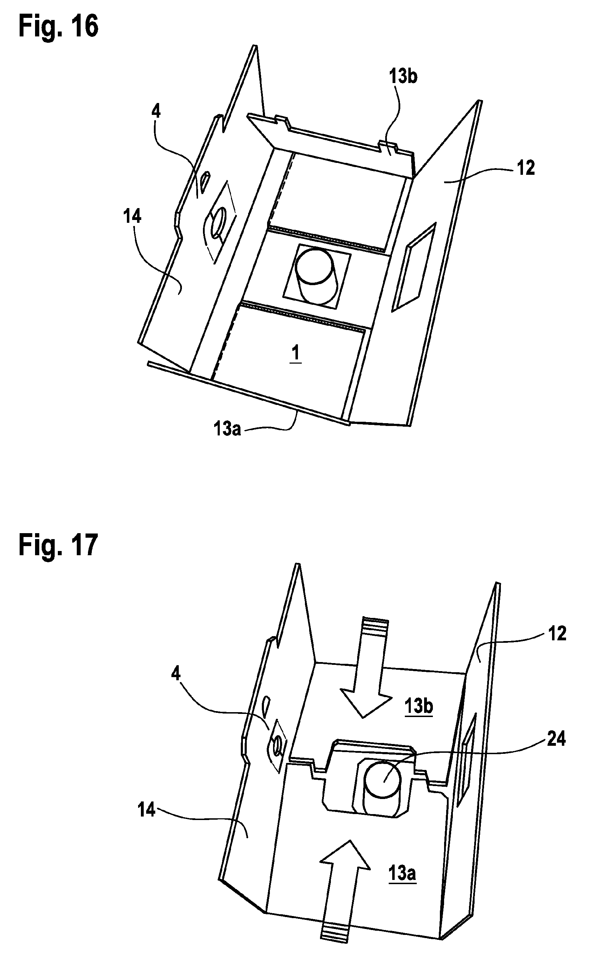

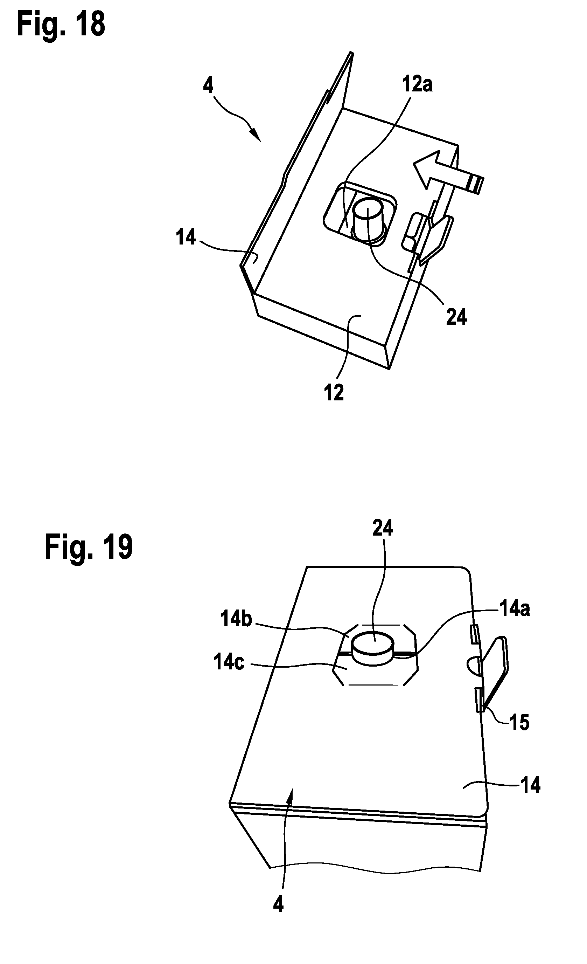

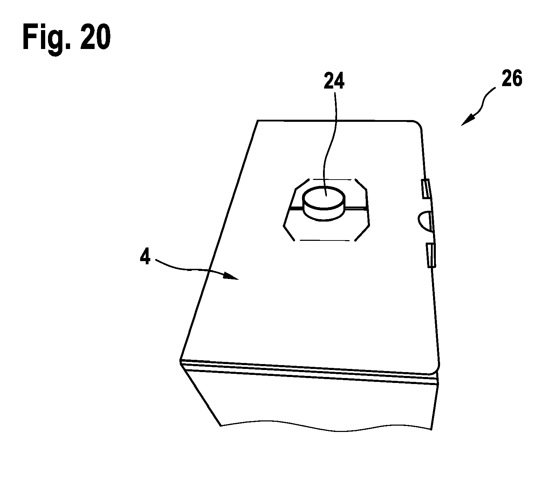

Nun wird die formstabile Hülle 4 geschlossen. Hierfür werden nach dem vollständigen Einsetzen der Falteinlage 1 in die formstabile Hülle 4 (Fig. 16) zunächst die kurzen Seitenlaschen 13a, 13b der formstabilen Hülle 4 auf das obere wandartige Segment 25a der Falteinlage 1 umgefaltet (Fig. 16, Fig. 17). Anschließend wird die lange Deckellasche 12 umgefaltet (Fig. 18, Fig. 19). Die lange Deckellasche 12 hat eine Ausnehmung 12a, durch welche das Anschlusselement 24 hindurchtritt. Die Einfüllöffnung 23 des Auffangbeutels 21 mit dem Anschlusselement 24 wird durch eine Ausnehmung 14a in dem Deckel 14 der formstabilen Hülle 4 geführt. Dabei rasten die Kartonlaschen 14b, 14c des Deckels 14 in einen Haltebund des Anschlusselements 24 ein. Der Deckel 14 der formstabilen Hülle 4 wird abschließend durch das Einschieben der Sicherungslasche 15 in eine Ausnehmung 12b geschlossen. Das durch die umgefaltete Lasche 18a der Basisplatte 18 gebildete obere wandartige Segment 25a liegt somit von innen im Bereich des Deckels 14 an der formstabilen Hülle 4 an. Nun hat die erfindungsgemäße Falteinlage 1 in der formstabilen Hülle 4 auch kein Höhenspiel mehr und ist in deren Inneren derart fixiert, dass der Auffangbeutel 21 bei einer Bewegung des Schmierstoff-Auffangbehälters 26 stabilisiert ist. Fig. 20 stellt einen fertigen und einsatzbereiten Schmierstoff-Auffangbehälter 26 aus der formstabilen Hülle 4 mit darin aufgenommener Falteinlage 1 dar.

Die vorliegende Erfindung ist nicht auf den dargestellten quaderförmigen Schmierstoff-Auffangbehälter 26 beschränkt. Aufgrund der einfachen und variablen Konstruktion insbesondere der Falteinlage 1 lässt sich deren Form in weiten Grenzen verändern. So kann die Falteinlage 1 an verschiedene Arten von formstabilen Hüllen angepasst werden, beispielsweise an solche mit zylindrischer Form.

Daher ist es möglich, den Schmierstoff-Auffangbehälter 26 und damit die darin aufgenommene Falteinlage 1 in einfacher und kostengünstiger Art und Weise so zu dimensionieren, dass er in aus dem Stand der Technik bekannten Haltebleche passt, beispielsweise in solche, die aus der Druckschrift EP 2 093 474 A1 der Anmelderin bekannt sind.

### Bezugszeichenliste:

- 1: Falteinlage
- 2: Transportverpackung
- 3: Zuschnitt für formstabile Hülle 4
- 3a, 3b, 3c, 3d, 3e, 3f, 3i, 3k: Sollknickstellen im Zuschnitt 3
- 3h: Außenkante der Seitenwand 5d
- 4: formstabile Hülle
- 5a, 5b, 5c, 5d: Seitenwände der formstabilen Hülle 4
- 6: Verbindungslasche
- 7a: erstes Bodenteil
- 7b: zweites Bodenteil
- 8a, 8b, 8c, 8d: kurze Seitenlaschen
- 9a, 9b: Bodenlaschen
- 10a, 10b: Haltenasen
- 11a, 11b: Ausnehmungen
- 12: lange Deckellasche
- 12a, 12b: Ausnehmungen in der langen Deckellasche 12
- 13a, 13b: kurze Deckellaschen
- 14: Deckel
- 14a: Ausnehmung im Deckel 14
- 14b, 14c: Kartonlaschen im Deckel 14
- 15: Sicherungslasche
- 16: Eingriffsöffnung
- 17: Zuschnitt für Basisplatte
- 17a, 17b, 17c, 17d, 17e, 17f: Sollknickstellen im Zuschnitt 17
- 17g: obere Außenkante des Zuschnitts 17
- 17h: untere Außenkante des Zuschnitts 17
- 17i: rechte Außenkante des Zuschnitts 17
- 17k: linke Außenkante des Zuschnitts 17
- 18: Basisplatte
- 18a, 18b, 18c, 18d: Laschen der Basisplatte 18
- 18e: Mittelteil der Basisplatte 18
- 18f, 18g: schmale Stege der Basisplatte 18
- 19: Perforation
- 20: Ausnehmung
- 21: Auffangbeutel
- 21 a: rechter Rand des Auffangbeutels 21
- 21 b: linker Rand des Auffangbeutels 21
- 22: Membran
- 22a: rechte Außenkante der Membran 22
- 22b: linke Außenkante der Membran 22
- 23: Einfüllöffnung
- 24: Anschlusselement
- 25a: oberes wandartiges Segment
- 25b: mittleres wandartiges Segment
- 25c: unteres wandartiges Segment
- 26: Schm ierstoff-Auffangbehälter

## Patentansprüche

1. Schmierstoff-Auffangbehälter mit einer formstabilen Hülle (4) und einem darin aufgenommenen Auffangbeutel (21), wobei der Auffangbeutel (21) durch eine Haltevorrichtung in der formstabilen Hülle (4) fixiert und bei einer Bewegung des Schmierstoff-Auffangbehälters (26) derart stabilisiert ist, dass sich der Auffangbeutel (21) bei einer Bewegung des Schmierstoff-Auffangbehälters (26) nicht frei bewegen kann, **dadurch gekennzeichnet, dass** die Haltevorrichtung eine Falteinlage (1) mit einer Basisplatte (18) und einer die Basisplatte (18) zumindest teilweise überdeckenden Membran (22) umfasst, wobei der Auffangbeutel (21) im Wesentlichen zwischen der Basisplatte (18) und der Membran (22) angeordnet ist und die Membran (22) den Auffangbeutel (21) bei gefalteter Falteinlage (1) vorzugsweise vollständig überspannt.

2. Schmierstoff-Auffangbehälter nach Anspruch 1, **dadurch gekennzeichnet, dass** die Basisplatte (18) wenigstens eine Sollknickstelle (17a, 17b, 17c, 17d, 17e, 17f), vorzugsweise vier Sollknickstellen, insbesondere sechs Sollknickstellen zur Faltung aufweist, wobei die Sollknickstelle (17a, 17b, 17c, 17d, 17e, 17f) vorzugsweise im Wesentlichen parallel zu einer Außenkante (17g, 17h, 17i, 17k) der Basisplatte (18) verläuft.

3. Schmierstoff-Auffangbehälter nach einem der Ansprüche 1 oder 2, **dadurch gekennzeichnet, dass** die Falteinlage (1) derart faltbar ist, dass sie mindestens zwei, vorzugsweise drei, wandartige Segmente (25a, 25b, 25c) ausbildet, welche an mindestens zwei, vorzugsweise drei, benachbarten Wänden (5a, 5b, 5c, 5d) der formstabilen Hülle (4) anliegen.

4. Schmierstoff-Auffangbehälter nach einem der Ansprüche 1 bis 3, **dadurch gekennzeichnet, dass** die Basisplatte (18) eine Ausnehmung (20) für die Anordnung einer Einfüllöffnung (23) des Auffangbeutels (21) aufweist.

5. Schmierstoff-Auffangbehälter nach einem der Ansprüche 1 bis 4, **dadurch gekennzeichnet, dass** die Membran (22) eine Dehnung von bis zu 400% aufweist.

6. Schmierstoff-Auffangbehälter nach einem der vorhergehenden Ansprüche, **dadurch gekennzeichnet, dass** das Wandmaterial der formstabilen Hülle (4) und/oder das Material der Basisplatte (18) der Falteinlage (1) Karton, Pappe oder Wellpappe enthält.

7. Schmierstoff-Auffangbehälter nach einem der vorhergehenden Ansprüche, **dadurch gekennzeichnet, dass** der Auffangbeutel (21) ein Kunststoffbeutel ist.

8. Schmierstoff-Auffangbehälter nach einem der vorhergehenden Ansprüche, **dadurch gekennzeichnet, dass** der Auffangbeutel (21) im Bereich der Einfüllöffnung (23) wiederholt lösbar an der Basisplatte (18) der Falteinlage (1) und/oder an der formstabilen Hülle (4) befestigt ist.

9. Schmierstoff-Sammeleinrichtung mit wenigstens einem an einer Schmierstelle anbringbaren Auffangelement zum Auffangen von Schmierstoff, welcher von der Schmierstelle abgegeben wird, wobei das Auffangelement vorzugsweise über wenigstens eine Sammelleitung mit wenigstens einem Schmierstoff-Auffangbehälter (26) nach einem der vorhergehenden Ansprüche in Strömungsverbindung steht.

10. Schmierstoff-Sammeleinrichtung nach Anspruch 9, **dadurch gekennzeichnet, dass** der Schmierstoff-Auffangbehälter (26) wiederholt lösbar mit der Sammelleitung verbunden ist.

11. Falteinlage für einen Schmierstoff-Auffangbehälter (26) mit einer formstabilen Hülle (4) und einem Auffangbeutel (21), wobei die Falteinlage (1) eine Basisplatte (18) und eine die Basisplatte (18) zumindest teilweise überdeckende Membran (22) umfasst, wobei der Auffangbeutel (21) im Wesentlichen zwischen der Basisplatte (18) und der Membran (22) anordenbar ist und wobei der Auffangbeutel (21) mittels der Membran (22) vorzugsweise vollständig überspannbar ist.

12. Falteinlage nach Anspruch 11, **dadurch gekennzeichnet, dass** die Basisplatte (18) wenigstens eine Sollknickstelle (17a, 17b, 17c, 17d, 17e, 17f), vorzugsweise vier Sollknickstellen, insbesondere sechs Sollknickstellen, zur Faltung aufweist, wobei die Sollknickstelle (17a, 17b, 17c, 17d, 17e, 17f) vorzugsweise im Wesentlichen parallel zu einer Außenkante (17g, 17h, 17i, 17k) der Basisplatte (18) verläuft.

13. Falteinlage nach einem der Ansprüche 11 oder 12, **dadurch gekennzeichnet, dass** die Falteinlage (1) derart faltbar ist, dass sie mindestens zwei, vorzugsweise drei, wandartige Segmente (25a, 25b, 25c) ausbildet, welche an mindestens zwei, vorzugsweise drei, benachbarte Wände (5a, 5b, 5c, 5d) der formstabilen Hülle (4) anlegbar ist.

14. Falteinlage nach einem der Ansprüche 11 bis 13, **dadurch gekennzeichnet, dass** die Basisplatte (18) eine Ausnehmung (20) für die Anordnung einer Einfüllöffnung (23) des Auffangbeutels (21) aufweist und/oder dass das Material der Basisplatte (18) Karton, Pappe oder Wellpappe enthält..

15. Falteinlage nach einem der Ansprüche 11 bis 14, **dadurch gekennzeichnet, dass** die Membran (22) eine Dehnung von bis zu 400% aufweist.
